# EUROPÄISCHE PATENTSCHRIFT

(11) **EP 2 652 278 B1**
(45) Veröffentlichungstag und Bekanntmachung des Hinweises auf die Patenterteilung: **29.04.2015**
(21) Anmeldenummer: 11804525.1
(22) Anmeldetag: 12.12.2011
(51) Int. Cl.: F01N 3/20, B65D 83/00

(54) **Flüssigkeitsentnahmemodul und Flüssigkeitstank**
Liquid extraction module and liquid tank
Module de prélèvement de liquide et réservoir de liquide

(30) Priorität: 14.12.2010 DE 102010062997
(43) Veröffentlichungstag der Anmeldung: 23.10.2013
(73) Patentinhaber: Robert Bosch GmbH, 70442 Stuttgart (DE)
(72) Erfinder: SCHOTT, Steffen, 71701 Schwieberdingen (DE); LANDES, Ewgenij, 71686 Remseck (DE)
(86) Internationale Anmeldenummer: PCT/EP2011/072400
(87) Internationale Veröffentlichungsnummer: WO 2012/080147

(56) Entgegenhaltungen:
- EP-A1- 2 299 079
- WO-A1-2007/141312

## Beschreibung

Die Erfindung betrifft ein Flüssigkeitsentnahmemodul zur Entnahme von Flüssigkeit aus einem Flüssigkeitstank, insbesondere eines Abgasnachbehandlungssystems eines Kraftfahrzeugs, umfassend einen in und/oder an dem Fahrzeugtank anordenbaren Grundkörper, der eine Flüssigkeitsentnahmeeinrichtung mit einer dem Tankinnenraum zuordenbaren Entnahmeöffnung und mindestens ein elektrisches Heizelement trägt.

Ferner betrifft die Erfindung einen Flüssigkeitstank für ein Fahrzeug, insbesondere für ein Abgasnachbehandlungssystem eines Kraftfahrzeugs, mit wenigstens einer Wandung, die eine Öffnung aufweist, wobei in und/oder an dem Flüssigkeitstank ein Flüssigkeitsentnahmemodul zur Entnahme von Flüssigkeit aus dem Tank die Öffnung verschließend angeordnet ist.

### Stand der Technik

Flüssigkeitsmodule sowie Flüssigkeitstanks der eingangs genannten Art sind aus dem Stand der Technik bekannt. So offenbart beispielsweise die deutsche Offenlegungsschrift DE 10 2006 027 487 A1 einen Fahrzeugtank für wässrige Harnstofflösungen, der eine Öffnung aufweist, in welche ein Flüssigkeitsentnahmemodul derart eingesetzt ist, dass es die Öffnung dicht verschließt. Das Flüssigkeitsentnahmemodul umfasst einen Grundkörper, der eine Flüssigkeitsentnahmeeinrichtung zur Entnahme von Flüssigkeit aus dem Tank trägt. Die Flüssigkeitsentnahmeeinrichtung umfasst zumindest einen zu einer Entnahmeöffnung führenden Entnahmekanal, wobei die Entnahmeöffnung dem Tankinnenraum zugeordnet ist. Weiterhin trägt das Flüssigkeitsentnahmemodul ein elektrisches Heizelement, das bei tiefen Umgebungstemperaturen ein Auftauen von in dem Flüssigkeitstank gefrorener Flüssigkeit ermöglicht, sodass auch bei tiefen Temperaturen aus dem Flüssigkeitstank entnehmbare Flüssigkeit zur Verfügung steht beziehungsweise zur Verfügung gestellt wird.

Die WO 2007/141312 A1 beschreibt eine Anordnung zur Speicherung eines Additivs zur Abgasbehandlung mit einer Grundplatte, welche eine Entnahmeöffnung aufweist.

Die nachveröffentlichte EP 2 299 079 A1 offenbart einen Filtereinsatz mit einer Heizeinrichtung zum Einsetzen in einen Harnstofftank.

### Offenbarung der Erfindung

Das erfindungsgemäße Flüssigkeitsentnahmemodul hat den Vorteil, dass Flüssigkeit im Entnahmebereich besonders schnell beziehungsweise zuerst aufgewärmt und gegebenenfalls aufgetaut wird, sodass kurz nach einem Systemstart bereits Flüssigkeit dem Flüssigkeitstank entnommen werden kann, und beispielsweise aufgetaute Flüssigkeit durch im Entnahmebereich befindliche gefrorene Flüssigkeit nicht gehindert wird, in den Entnahmekanal beziehungsweise aus dem Flüssigkeitstank zu gelangen. Das erfindungsgemäße Flüssigkeitsentnahmemodul zeichnet sich dadurch aus, dass mindestens ein Wärmeleitelement vorgesehen ist, das zumindest einen dem Heizelement zugeordneten ersten Abschnitt und einen der Entnahmeöffnung zugeordneten zweiten Abschnitt aufweist, um die Wärme von dem Wärmeleitelement zu der Entnahmeöffnung zu transportieren. Zusätzlich zu dem Heizelement ist somit ein vorzugsweise separates Wärmeleitelement vorgesehen, das die von dem Heizelement erzeugte Wärme zu der Entnahmeöffnung leitet. Das Heizelement erstreckt sich vorzugsweise in einer Ebene insbesondere rippen- beziehungsweise sternenförmig, um auf einer großen Fläche Wärmeenergie bereitzustellen. Besonders bevorzugt überdeckt das Heizelement beziehungsweise erstreckt sich das Heizelement auch über die Entnahmeöffnung. Somit wird Flüssigkeit im Umgebungsbereich der Entnahmeöffnung sicher erwärmt beziehungsweise aufgetaut. Der erste Abschnitt des Wärmeleitelements ist dem Heizelement derart zugeordnet, dass es die von dem Heizelement ausgehende Wärme aufnimmt, während der zweite Abschnitt der Entnahmeöffnung zugeordnet ist, um dort die aufgenommene Wärme wieder abzugeben beziehungsweise abzustrahlen. In einer bevorzugten Ausführungsform ragt das Wärmeleitelement bis in die Entnahmeöffnung hinein, um ein sicheres Auftauen des gesamten Entnahmebereichs zu gewährleisten. Der erste Abschnitt des Wärmeleitelements ist bevorzugt beabstandet zu dem Heizelement angeordnet, sodass es beispielsweise bei Verformungen des Flüssigkeitsentnahmemoduls im Betrieb nicht zu zusätzlichen Verspannungen führt. In einer bevorzugten alternativen Ausführungsform liegt der erste Abschnitt an dem Heizelement an, sodass ein Berührungskontakt besteht, und die von dem Heizelement ausgehende Wärme direkt auf das Wärmeleitelement übertragen wird, wodurch Wärmeverluste verringert werden. Dabei ist vorgesehen, dass zwischen dem Heizelement und der Entnahmeöffnung ein Filterelement angeordnet ist. Das Filterelement dient zum Filtern der Flüssigkeit, bevor diese durch die Entnahmeöffnung und in den Entnahmekanal geführt beziehungsweise gesaugt wird.

Vorzugsweise ist das Wärmeleitelement als Wärmeleitstift, als Wärmeleithülse oder als Wärmeleitblech ausgebildet. Dabei ist vorzugsweise der erste Abschnitt des jeweiligen Wärmeleitelements der Unterseite oder einer Seitenfläche des Heizelements zugeordnet. Der Wärmeleitstift zeichnet sich durch eine bevorzugt zumindest im Wesentlichen zylindrische Ausbildung aus, und wird vorzugsweise wie ein Bolzen in einer entsprechenden Öffnung beispielsweise des Grundkörpers gehalten. Die Wärmeleithülse unterscheidet sich von dem Wärmeleitstift dadurch, dass sie einen zumindest im Wesentlichen ringförmigen Querschnitt aufweist und damit als Hohlzylinder ausgebildet ist. Der jeweils erste Abschnitt des Wärmeleitstifts und der Wärmeleithülse werden bevorzugt von einer jeweiligen Stirnseite gebildet, sodass der Wärmeleitstift oder die Wärmeleithülse vorzugsweise senkrecht zu der Unterseite des Heizelements ausgerichtet sind. Der zweite Abschnitt wird vorzugsweise jeweils von der zweiten Stirnseite oder aber von dem der ersten Stirnseite gegenüberliegenden Ende des Wärmeleitstifts oder der Wärmeleithülse gebildet. So können der Wärmeleitstift oder die Wärmeleithülse bis vor die Entnahmeöffnung geführt werden beziehungsweise vor dieser enden, oder aber in die Entnahmeöffnung hineinragen, sodass der jeweilige Endbereich der Entnahmeöffnung zugeordnet und bereichsweise in diese eingeführt ist. Das Wärmeleitblech zeichnet sich durch eine Blechstruktur aus, ist also flach ausgebildet, vorzugsweise mit einem im Wesentlichen rechteckförmigen Querschnitt. Besonders bevorzugt wird der erste Abschnitt des als Wärmeleitelement ausgebildeten Wärmeleitblechs von einem Endbereich und der zweite Abschnitt von einem zweiten Endbereich gebildet. Besonders bevorzugt ist das Wärmeleitblech als Winkelblech ausgebildet beziehungsweise mit mindestens einem Winkel versehen, sodass der erste Endabschnitt vorzugsweise senkrecht zu dem zweiten Endabschnitt ausgerichtet ist. Besonders bevorzugt ist der erste Endabschnitt des Wärmeleitblechs beziehungsweise der erste Abschnitt des Wärmeleitelements einer Seitenfläche des Heizelements zugeordnet, während der zweite Endabschnitt beziehungsweise der zweite Abschnitt sich über die Entnahmeöffnung erstreckt.

Besonders bevorzugt wird die Entnahmeöffnung von dem Grundkörper gebildet. Mit anderen Worten ist die Entnahmeöffnung also einstückig mit dem Grundkörper ausgebildet beziehungsweise wird von einer Öffnung in dem Grundkörper gebildet. Vorzugsweise schließt sich an die Entnahmeöffnung der bevorzugt ebenfalls von dem Grundkörper und/oder von der Flüssigkeitsentnahmeeinrichtung gebildete Entnahmekanal an, der zu einem von außen zugänglichen Anschluss führt, der beispielsweise als Stutzen insbesondere einstückig mit dem Grundkörper und/oder mit der Flüssigkeitsentnahmeeinrichtung ausgebildet ist.

Vorzugsweise ist die Wärmeleithülse bereichsweise in die Entnahmeöffnung, insbesondere kraftschlüssig eingebracht. So sind der Außendurchmesser der Wärmeleithülse sowie der Innendurchmesser der Entnahmeöffnung entsprechend gewählt, um eine Presspassung zu bilden. Dadurch ist die Wärmeleithülse sicher an dem Grundkörper befestigt, ohne dass weitere Hilfsmittel notwendig sind.

Gemäß einer vorteilhaften Weiterbildung der Erfindung ist vorgesehen, dass das Wärmeleitblech als gelochtes Wärmeleitblech und/oder die Wärmhülse als seitlich geschlitzte Wärmeleithülse ausgebildet sind. Die geschlitzte Ausführungsform der Wärmeleithülse sowie die gelochte Ausführungsform des Wärmeleitblechs erlauben die besonders nahe Anordnung des Wärmeleitblechs beziehungsweise der Wärmeleithülse an der Entnahmeöffnung, ohne dass die Flüssigkeit an einem Eindringen in die Entnahmeöffnung durch das jeweilige Wärmeleitelement verhindert wird. Darüber hinaus wird durch die gelochte beziehungsweise geschlitzte Ausbildung des jeweiligen Wärmeleitelements Gewicht gespart.

Vorzugsweise umfasst die Flüssigkeitsentnahmeeinrichtung eine Fördereinrichtung, wie beispielsweise eine Pumpe, um die Flüssigkeit aus dem Tankinnenraum durch die Entnahmeöffnung herauszufördern. Besonders bevorzugt ist die Fördereinrichtung in den Grundkörper des Flüssigkeitsentnahmemoduls integriert ausgebildet beziehungsweise angeordnet.

Das Filterelement weist bevorzugt eine Öffnung auf, in welcher das Wärmeleitelement angeordnet oder gehalten ist. Das Filterelement weist dazu vorzugsweise eine Stützstruktur auf, welche Filtergewebe trägt. Die Stützstruktur ist vorzugsweise aus Kunststoff ausgebildet und weist an einer, insbesondere der Entnahmeöffnung gegenüberliegenden Stelle, die Durchgangsöffnung auf. Das jeweilige Wärmeleitelement ist in der Durchgangsöffnung bevorzugt kraftschlüssig und insbesondere dicht gehalten.

Gemäß einer vorteilhaften Weiterbildung der Erfindung ist vorgesehen, dass der Wärmeleitstift einstückig mit dem Heizelement beziehungsweise mit einer Ummantelung des Heizelements ausgebildet ist. So weist die Ummantelung des Heizelements vorzugsweise einen zylinderförmigen, den Wärmeleitstift bildenden Vorsprung auf, der sich in Richtung der Entnahmeöffnung erstreckt. Besonders bevorzugt erstreckt sich der Wärmeleitstift dabei durch die Durchgangsöffnung des Filterelements, wobei hier eine kraftschlüssige Verbindung zwischen Wärmeleitstift und Filterelement beziehungsweise Durchgangsöffnung nicht notwendig ist, aber zum Arretieren durchaus vorgesehen werden kann.

Der erfindungsgemäße Flüssigkeitstank zeichnet sich durch ein Flüssigkeitsentnahmemodul aus, wie es oben beschrieben wurde. Der Grundkörper des Flüssigkeitsentnahmemoduls sowie die Wandung des Tanks sind vorzugsweise aus dem gleichen Material, insbesondere aus dem gleichen Kunststoff, besonders bevorzugt aus HDPE-Kunststoff (HDPE = hochdichtes Polyethylen) gebildet und im Kontaktbereich miteinander verschweißt. Vorzugsweise ist die Öffnung des Flüssigkeitstanks in einem von der Wandung gebildeten Boden angeordnet, sodass das Flüssigkeitsentnahmemodul vorzugsweise den tiefsten Punkt des Flüssigkeitstanks bildet, um das in dem Flüssigkeitstank befindliche Flüssigkeitsvolumen stets optimal auszunutzen, und um die zur Verfügung stehende Heizenergie bestmöglich zu nutzen. Alternativ ist es natürlich auch denkbar, den Grundkörper an der Wandung des Tanks durch Verschrauben, Verklemmen oder dergleichen festzulegen. Auch ist es denkbar, den Grundkörper sowie die Öffnung der Wandung mit einem Bajonettverschluss zu versehen, mittels dessen das Flüssigkeitsentnahmemodul auf einfache Art und Weise an dem Flüssigkeitstank festlegbar ist. Zusätzlich oder alternativ kann auch ein Klebstoff zum Befestigen und/oder zum Abdichten vorgesehen sein.

Im Folgenden soll die Erfindung anhand der Zeichnung näher erläutert werden. Dazu zeigen
- Figur 1: ein Flüssigkeitsentnahmemodul gemäß eines ersten Ausführungsbeispiels,
- Figur 2: eine Schnittansicht des Flüssigkeitsentnahmemoduls,
- Figur 3: eine weitere Schnittansicht des Flüssigkeitsentnahmemoduls,
- Figur 4: das Flüssigkeitsentnahmemodul gemäß einem weiteren Ausführungsbeispiel,
- Figur 5: das Flüssigkeitsentnahmemodul gemäß einem weiteren Ausführungsbeispiel,
- Figur 6: das Flüssigkeitsentnahmemodul gemäß einem weiteren Ausführungsbeispiel,
- Figur 7: ein elektrisches Heizelement des Flüssigkeitsentnahmemoduls und
- Figur 8: ein weiteres Ausführungsbeispiel des Flüssigkeitsentnahmemoduls.

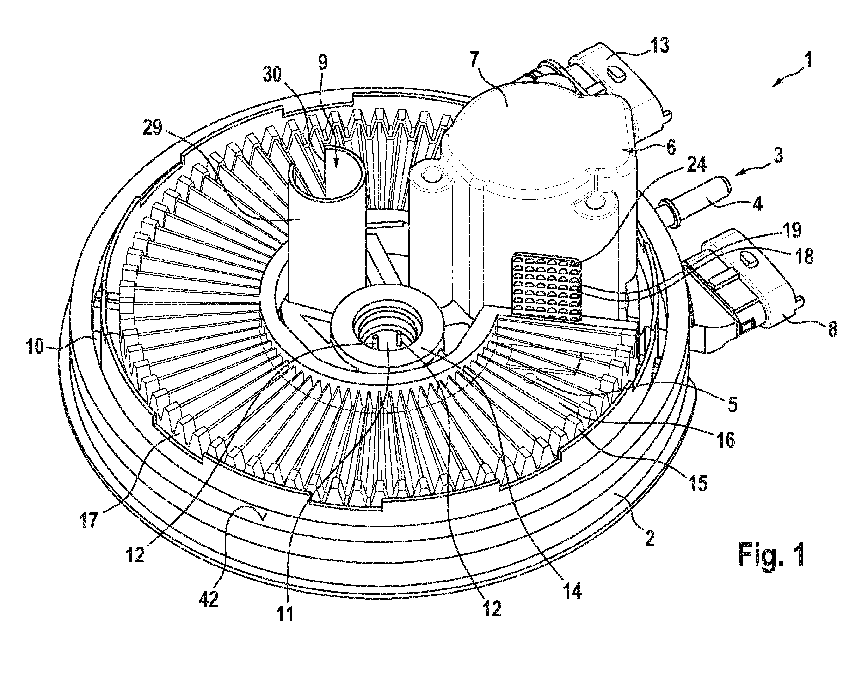

Figur 1 zeigt in einer perspektivischen Darstellung ein Flüssigkeitsentnahmemodul 1 gemäß einem ersten Ausführungsbeispiel. Das Flüssigkeitsentnahmemodul 1 umfasst einen Grundkörper 2, der bevorzugt aus Kunststoff gefertigt ist und eine kreisförmige Grundform aufweist. Das Flüssigkeitsentnahmemodul 1 beziehungsweise der Grundkörper 2 sind derart ausgebildet, dass es/er in eine Öffnung einer Wandung eines Flüssigkeitstanks derart anordenbar ist, dass es/er die Öffnung dicht verschließt. Der Grundkörper 2 umfasst einen Entnahmekanal 3, der von einem von außen erreichbaren Anschluss 4 zu einer Entnahmeöffnung 5 führt, welche auf der dem Tankinnenraum zugewandten Seite des Grundkörpers 2 angeordnet ist. Der Entnahmekanal 3 wird bereichsweise durch eine Flüssigkeitsentnahmeeinrichtung 6 gebildet, die zumindest teilweise in einem von dem Grundkörper 2 gebildeten Gehäuse 7, in den Tankinnenraum ragend angeordnet ist. Der Flüssigkeitsentnahmekanal 3 wird hierbei nur zum Teil von dem Grundkörper 2 gebildet. Er wird durch die Flüssigkeitsentnahmeeinrichtung 6 weiter gebildet, die in das Gehäuse 7 eingesetzt und in dem vorliegenden Ausführungsbeispiel von dem Grundkörper 2 nicht vollständig eingehaust ist, sodass sie auf der dem Tankinnenraum abweisenden Seite freiliegt. Durch entsprechende Dichtelemente sind die Flüssigkeitsentnahmeeinrichtung und der Grundkörper 2 miteinander dicht verbunden. Durch den Grundkörper 2 führen von der Flüssigkeitsentnahmeeinrichtung 6 elektrische Leitungen zu einem im verbauten Zustand von außen zugänglichen Stecker 8, der bevorzugt einstückig mit dem Grundkörper 2 ausgebildet oder von diesem umspritzt ist. Ferner umfasst das Flüssigkeitsentnahmemodul 1 eine Füllstandserfassungseinrichtung 9, auf deren Ausbildung später näher eingegangen werden soll. Der Grundkörper 2 bildet einen Bodenbereich 10, in welchem auch die Entnahmeöffnung 4 liegt, und von welchem aus das Gehäuse 7 absteht. Mittig weist der Grundkörper 2 in dem Boden 10 eine Vertiefung 11 auf, die zumindest bereichsweise kegelstumpfartig ausgebildet ist. In die Vertiefung ragen zwei Anschlusskontakte 12 axial hinein, die in durch den Grundkörper 2 führende Leitungen übergehen beziehungsweise mit diesen elektrisch verbunden sind. Diese elektrischen Leitungen führen zu einem zweiten, von außen im montierten Zustand zugänglichen Stecker 13. Die Vertiefung 11 wird von einer kreisringförmigen Kontaktfläche 14 umrandet beziehungsweise begrenzt.

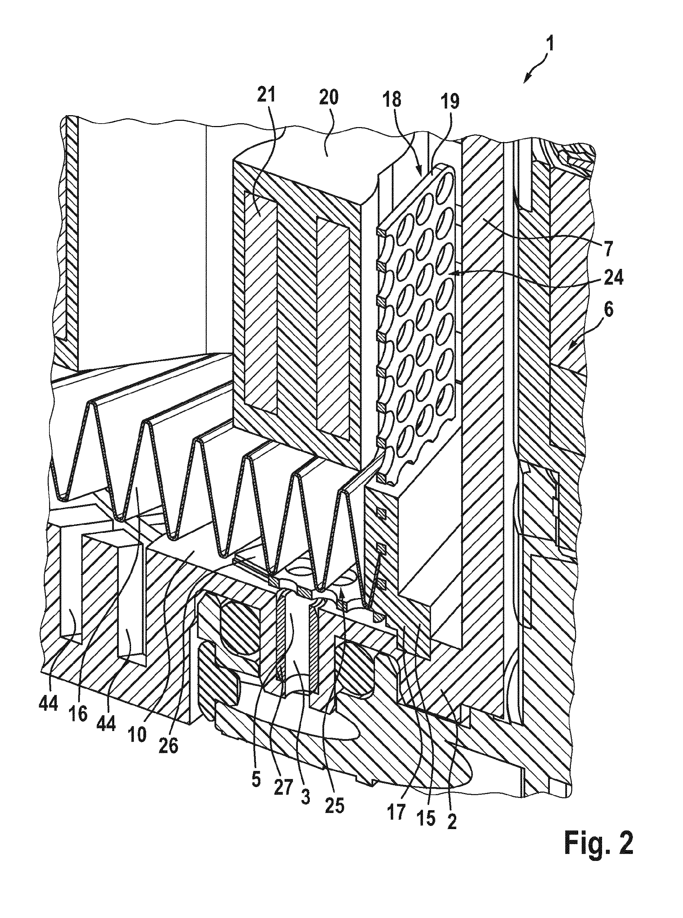

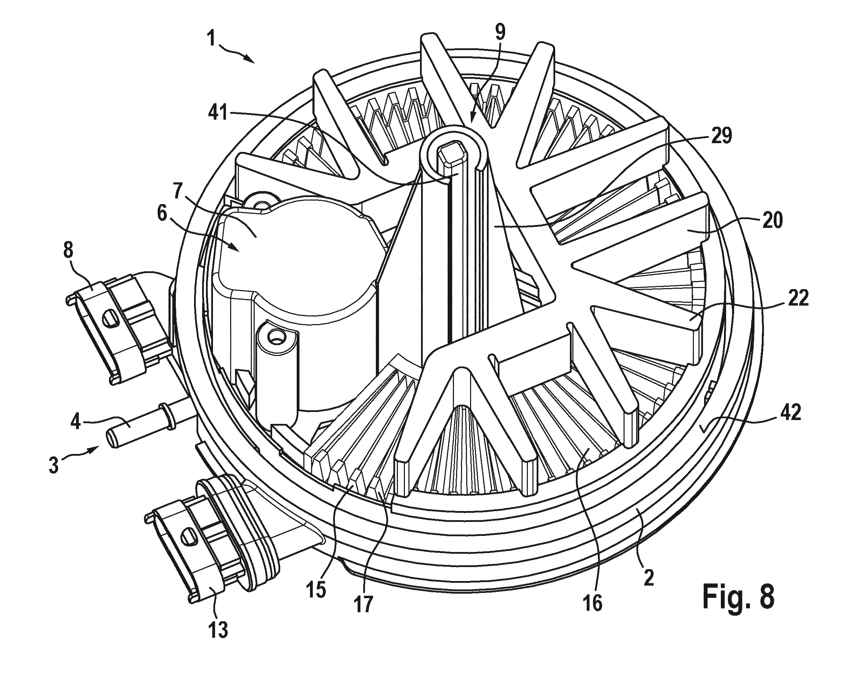

Ferner umfasst das Flüssigkeitsentnahmemodul 1 ein Filterelement 15, das kreisringsegmentförmig ausgebildet ist und ein Filtergewebe 16 aufweist, das von einer umspritzten Stützstruktur 17 eingefasst ist. Das Filterelement 15 liegt auf dem Boden 10 des Grundkörpers 2 derart auf, dass es die Entnahmeöffnung 5 überdeckt. In der Stützstruktur 17 ist weiterhin ein Wärmeleitelement 18 gehalten, das als gelochtes Wärmeleitblech 19 ausgebildet ist. Das Filterelement 15, beziehungsweise insbesondere das Filtergewebe 16, ist im Entnahmebereich vorzugsweise ohne Faltung/Pläsierung ausgeführt, sodass sich die Wärme in diesem Bereich schneller ausbreiten und zum Auftauen genutzt werden kann. Oberhalb des Filterelements 15 ist ein elektrisches Heizelement 20 angeordnet, wie in Figur 2 in einer vergrößerten Schnittdarstellung gezeigt. Aus Übersichtlichkeitsgründen ist das Heizelement 20 in Figur 1 nicht dargestellt. Das Heizelement 20 erstreckt sich rippen- beziehungsweise fachwerkförmig, wie beispielsweise in Figur 8 dargestellt, zumindest im Wesentlichen über die gesamte Fläche des Filterelements 15. Das Heizelement 20 umfasst einen Heizkörper 21, der bevorzugt aus Aluminium gebildet ist, sowie eine Kunststoffummantelung 22, die den Aluminiumkörper 21 vollständig umgibt.

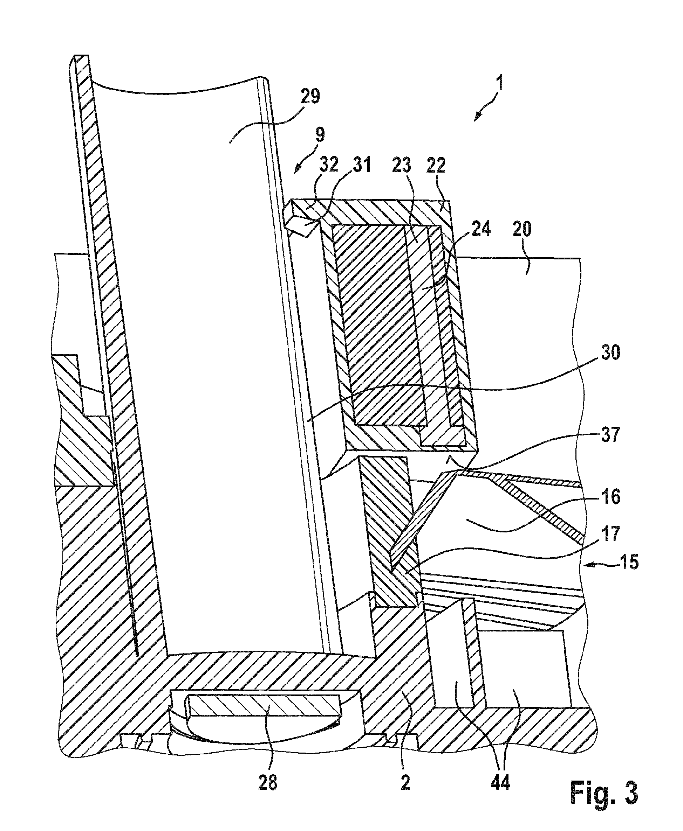

Wie aus Figur 3 entnehmbar, die eine weitere Schnittdarstellung des Flüssigkeitsentnahmemoduls 1 zeigt, weist das Heizelement 20 wenigstens ein, vorzugsweise zwei PTC-Heizelemente 23 auf, die vorzugsweise in Aufnahmetaschen 24 des Heizkörpers 21 eingebracht und durch die Kunststoffummantelung 22 eingehaust sind. Die PTC-Heizelemente 23 sind elektrisch mit den Kontaktanschlüssen 12 des Grundkörpers 2 verbindbar.

Wie aus Figur 2 ersichtlich, weist das Wärmeleitelement 18 einen ersten Abschnitt 24 auf, der dem Heizelement 20 zugeordnet ist, sowie einen zweiten Abschnitt 25, der der Entnahmeöffnung 5 zugeordnet ist. Das Wärmeleitblech 19 ist dazu als Winkelblech ausgebildet, wobei der erste Abschnitt 24 in einem rechten Winkel zu dem zweiten Abschnitt 25 ausgerichtet ist. Das Wärmeleitblech 19 ist in dem vorliegenden Ausführungsbeispiel von der Stützstruktur 17 des Filterelements 15 umspritzt, sodass es formschlüssig an beziehungsweise in dem Filterelement 15 gehalten ist. Der erste Abschnitt 24 erstreckt sich parallel zu einer Seitenwand des Heizelements 20, und ist in unmittelbarer Nähe zu dem Heizelement 20 angeordnet, sodass die von dem Heizelement 20 ausgehende Wärme auf das Wärmeleitblech 19 übertragen wird. Das Wärmeleitelement 18 beziehungsweise Wärmeleitblech 19 ist vorzugsweise aus einem Material mit einem hohen Wärmeleitkoeffizienten gefertigt, sodass es die aufgenommene Wärmeenergie mit nur geringen Wärmeverlusten in den Abschnitt 25 weiterleitet, welcher sich über die Entnahmeöffnung 5 erstreckt und nahe zu dieser angeordnet ist. Der Grundkörper 2 weist auf dem Boden 10, die Entnahmeöffnung 4 umgebend, mehrere in Umfangsrichtung voneinander beabstandete Vorsprünge 26 auf, die gewährleisten, dass die Entnahmeöffnung 5 durch das Wärmeleitelement 18 beziehungsweise Wärmeblech 19 nicht verschlossen werden kann. Die gelochte Ausbildung des Wärmeleitblechs 19 hat den gleichen Effekt, sodass die Entnahme von Flüssigkeit stets gewährleistet und eine einfache Montage ermöglicht wird.

Das Wärmeleitelement 18 leitet also die von dem Heizelement 20 ausgehende Wärme zu der Entnahmeöffnung 5, sodass bei tiefen Umgebungstemperaturen Flüssigkeit, die sich in der Nähe der Entnahmeöffnung 5 oder in dem der Entnahmeöffnung 5 nahen Bereich des Entnahmekanals 3 befindet und gefroren ist, schnell aufgetaut wird, um in kurzer Zeit Flüssigkeit bereitstellen zu können, die von der Flüssigkeitsentnahmeeinrichtung 6 beziehungsweise deren Pumpe aus dem Tankinnenraum durch den Entnahmekanal 3 gesaugt und an entsprechende Stelle gefördert werden kann.

Gemäß dem vorliegenden Ausführungsbeispiel ist ein weiteres Wärmeleitelement 18 vorgesehen, das als Wärmeleithülse 27 ausgebildet ist, und in dem Entnahmekanal 3, die Entnahmeöffnung 5 bildend, angeordnet ist. Die Wärmeleithülse 27 ist in die Entnahmeöffnung 5 eingebracht, wodurch die von dem Wärmeleitblech 19 transportierte Wärmeenergie weiter in den Entnahmekanal 3 geleitet wird, um einen Auftauvorgang zu beschleunigen beziehungsweise um den Auftauvorgang an von dem Heizelement 20 weiter entfernten Stellen zu ermöglichen. Alternativ kann die Wärmeleithülse auch lediglich als Stützhülse, ohne besondere Wärmeleiteigenschaften, ausgebildet sein.

Figur 3 zeigt einen Schnitt durch das Flüssigkeitsentnahmemodul 1 im Bereich der Füllstandserfassungseinrichtung 9. Diese umfasst einen Füllstandssensor 28 sowie ein Reflexionsrohr 29. Das Reflexionsrohr 29 ist einstückig mit dem Grundkörper 2 ausgebildet und erstreckt sich senkrecht an dem Heizelement 20 vorbei. Das Reflexionsrohr 29 ist, wie am besten aus Figur 1 ersichtlich, seitlich geschlitzt ausgebildet, wobei der Längsschlitz 30 dem Heizelement 20 zugeordnet ist, sodass in dem Reflexionsrohr 29 befindliche Flüssigkeit ebenfalls besonders schnell aufgetaut wird. Der Füllstandssensor 28 ist an der geschlossenen Unterseite des Reflexionsrohrs 29 angeordnet und erfasst den Füllstand des Flüssigkeitstanks berührungslos mittels Ultraschallwellen. Das Reflexionsrohr 29 kann alternativ auch trichterförmig ausgebildet sein. Durch den Längsschlitz 30 wird gewährleistet, dass der Flüssigkeitsstand in dem Reflexionsrohr 29 dem Flüssigkeitsstand des Flüssigkeitstanks entspricht. Alternativ könnte anstelle des Längsschlitzes 30 auch eine einfache Öffnung in der Mantelwand zum Flüssigkeitsablauf oder -nachlauf vorgesehen sein. Die Länge des Reflexionsrohrs ist vorzugsweise derart gewählt, dass die Messgenauigkeit im unteren Drittel des Füllstandsbereichs des Flüssigkeitstanks besonders hoch ist, beziehungsweise dass sich das Reflexionsrohr über das untere Drittel des Flüssigkeitstanks erstreckt. Um die Signalqualität der Füllstandserfassungseinrichtung 9 unabhängig von der sich ändernden Temperatur und Flüssigkeitsdichte zu gewährleiste und/oder gleichzeitig eine Fehlbetankung zu erkennen, ist eine Referenzfläche 31 vorgesehen, die in dem vorliegenden Ausführungsbeispiel von der Kunststoffummantelung 22 des Heizelements 20 gebildet wird. Dazu weist die Kunststoffummantelung 22 einen in den Längsschnitt 30 des Reflexionsrohrs 29 ragenden Vorsprung 32 auf, dessen dem Füllstandssensor 28 zugeordnete Unterseite die Referenzfläche 31 bildet. Alternativ kann die Referenzfläche auch von dem Grundkörper 2, dem Filterelement 15 oder einem anderen Element des Flüssigkeitsentnahmemoduls 1 gebildet werden.

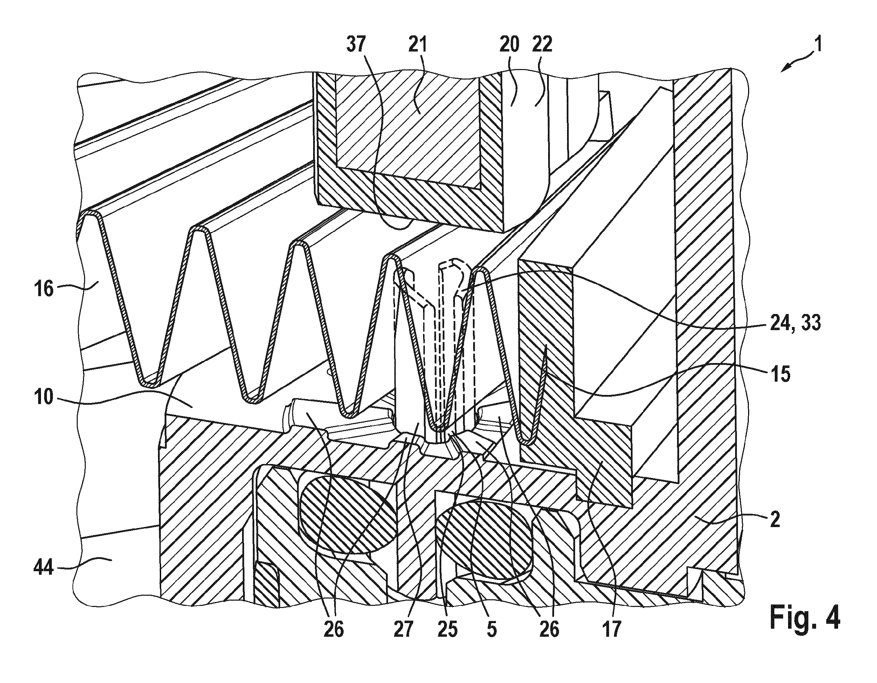

Figur 4 zeigt in einer vergrößerten Schnittdarstellung das Flüssigkeitsentnahmemodul 1 gemäß einem weiteren Ausführungsbeispiel. Gemäß diesem Ausführungsbeispiel ist lediglich ein Wärmeleitelement 18, nämlich die Wärmeleithülse 27 vorgesehen, die seitlich geschlitzt ausgebildet ist, und von dem Boden 10 des Grundkörpers 2 in das Filterelement 15 hineinragend vorsteht. Das freie Ende 33 bildet hierbei den ersten Abschnitt 24 des Wärmeleitelements 18, während der in der Entnahmeöffnung 5 liegende Bereich der seitlich geschlitzten Wärmeleithülse 27 den zweiten Abschnitt 25 bildet. Gemäß diesem Ausführungsbeispiel wird somit die Wärme von dem Heizelement 20 mittels der Wärmeleithülse 27 in den Entnahmebereich übertragen beziehungsweise transportiert.

Die seitlichen Schlitze der Wärmeleithülse 27 erstrecken sich bis auf Höhe des Bodens 10, sodass sich die Höhe der Entnahmeöffnung 5 nicht ändert. Darüber hinaus ist die Wärmeleithülse zweckmäßigerweise derart geformt beziehungsweise angeordnet, dass das Filtergewebe 16 nicht beschädigt wird.

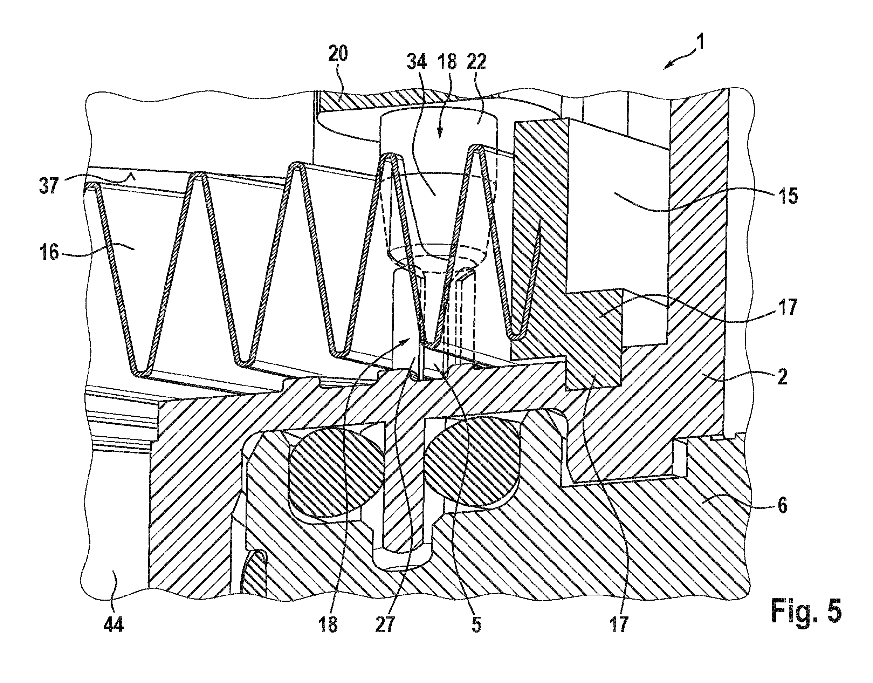

Figur 5 zeigt ein weiteres Ausführungsbeispiel des Flüssigkeitsentnahmemoduls 1 in einer Schnittdarstellung, wobei sich das Ausführungsbeispiel von dem vorhergehenden dahingehend unterscheidet, dass die Kunststoffummantelung 22 des Heizelements 20 einen Wärmeleitstift 34 bildet, der so ebenfalls ein Wärmeleitelement 18 darstellt. Der Wärmeleitstift 34 ist der Entnahmeöffnung 5 gegenüberliegend angeordnet und erstreckt sich in ihre Richtung, sodass die Wärme von dem Heizelement 20 in Richtung des Entnahmebereichs transportiert und der Abstand zu der Wärmeleithülse 27 verringert ist. Besonders bevorzugt weist das Filtergewebe im Bereich der Wärmeleitelemente 18 eine Aussparung auf, sodass die Wärmeleitelemente 18 dicht zueinander geführt werden können.

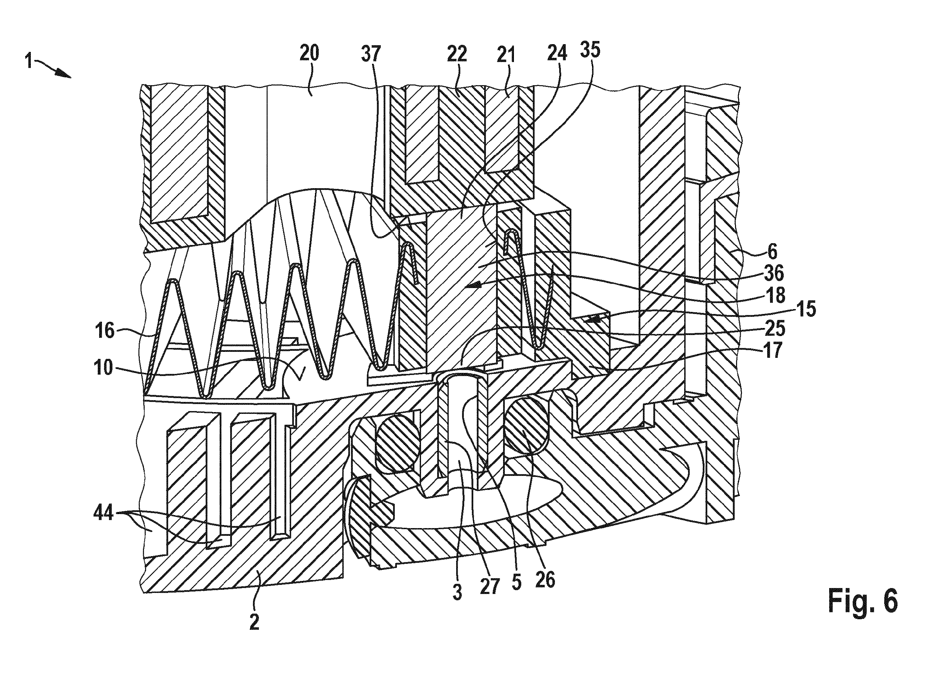

Figur 6 zeigt hierzu in einem weiteren Ausführungsbeispiel das Flüssigkeitsentnahmemodul 1, das sich von dem Ausführungsbeispiel gemäß Figur 4 insbesondere dahingehend unterscheidet, dass das Filterelement 15 im Bereich der Entnahmeöffnung 5 eine verbreiterte Stützstruktur 7 aufweist, in welcher eine Öffnung 35 ausgebildet ist, die sich in der gedachten Verlängerung der Entnahmeöffnung 5 in Richtung des Heizelements 20 erstreckt. In der Öffnung 35 ist ein Wärmeleitstift 36 kraft- und formschlüssig gehalten. Sein eines Ende bildet den Abschnitt 24, während das gegenüberliegende Ende den Abschnitt 25 des Wärmeleitelements 18 bildet, sodass die eine Stirnseite dem Heizelement 20 und die andere Stirnseite der Entnahmeöffnung 5 zugeordnet ist. Durch die oben bereits beschriebenen Vorsprünge 26 auf dem Boden 10 des Grundkörpers 2 wird gewährleistet, dass stets Flüssigkeit in die Entnahmeöffnung 5 gelangen kann. In dem Boden 10 sind weiterhin Schmutzfallen 44 ausgebildet, welche dazu dienen, Schmutzpartikel davon abzuhalten, in die Entnahmeöffnung 5 zu gelangen. Die Schmutzpartikel werden in der jeweiligen Schmutzfalle 44 gesammelt und auch bei stärkeren Bewegungen des Flüssigkeitsentnahmemoduls 1 darin gehalten, sodass sie nicht wieder hoch geschwemmt werden.

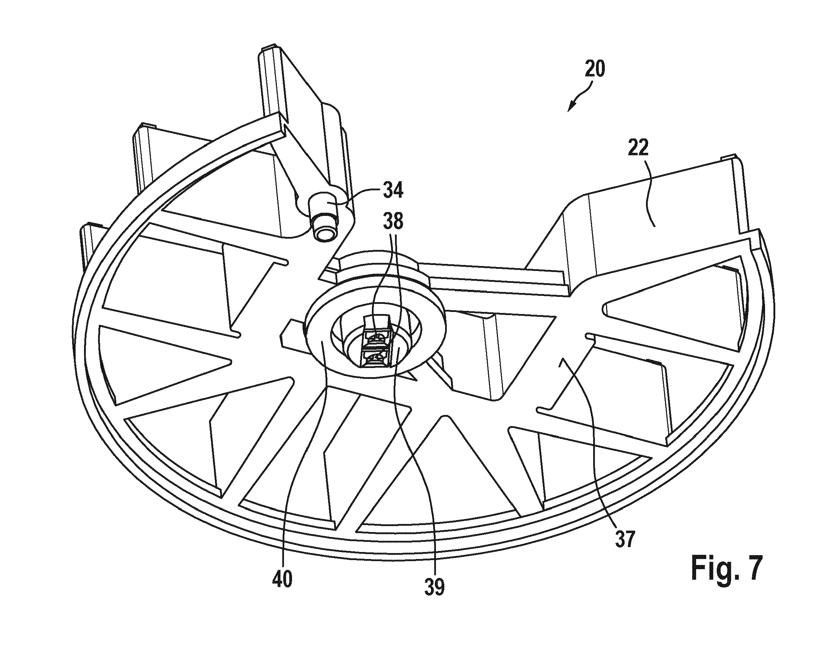

Figur 7 zeigt das Heizelement 20 mit dem Wärmeleitstift 34 in einer perspektivischen Darstellung. Die Kunststoffummantelung 22 des Heizelements 20 ist vorteilhafterweise aus dem gleichen Kunststoff gebildet, wie der Grundkörper 2, und weist zusätzlich mindestens einen Füllstoff mit hoher Wärmeleitfähigkeit auf. Bei dem Füllstoff handelt es sich vorzugsweise um einen mineralischen Füllstoff und/oder Glasfasern. Vorteilhafterweise macht der Füllstoff einen Volumenanteil von im Wesentlichen 10 % oder einen Gewichtsanteil von im Wesentlichen 30 % der Kunststoffummantelung 22 aus. An seiner Unterseite 37 weist das Heizelement 20 etwa mittig angeordnet Anschlusskontakte 38 auf, die zu den von der Kunststoffummantelung 22 eingehausten PTC-Heizelementen 23 führen. Die Anschlusskontakte 38 sind als Aufnahmen ausgebildet und an einer freien Stirnseite eines im Wesentlichen kegelstumpfförmigen Vorsprungs 39 der Kunststoffummantelung 22 angeordnet. Die Kunststoffummantelung 22 weist weiterhin an der Unterseite 37 koaxial zu dem Vorsprung 29 angeordnet eine kreisringförmige Kontaktfläche 40 auf, deren Durchmesser dem Durchmesser der Kontaktfläche 14 des Grundkörpers 2 entspricht. Bei der Montage wird das Heizelement 20 auf den Grundkörper 2, wie in Figur 1 dargestellt, derart aufgesetzt, dass der Vorsprung 39 in die Vertiefung 11 eingeführt wird. Die als Pins ausgeführten Anschlusskontakte 12 werden dabei in die als Aufnahmen ausgeführten Anschlusskontakte 38 automatisch eingeführt. Der Vorsprung 39 und die Vertiefung 11 sind dazu derart ausgebildet, dass sie formschlüssig radial ineinander passen. Die Kontaktfläche 40 kommt dabei auf der Kontaktfläche 14 zum Liegen. Durch einen Schweißvorgang, insbesondere durch Heizelementschweißen, werden die Kontaktflächen 40 und 14 miteinander verschweißt, wodurch eine dichte und robuste Verbindung zwischen dem Heizelement 20 und dem Grundkörper 2 entsteht. Da beide Elemente aus dem gleichen Kunststoff gefertigt sind, vorzugsweise HDPE (hochdichtes Polyethylen), lässt sich die Schweißverbindung besonders sicher gewährleisten. Aufgrund des mindestens einen Füllstoffs in der Kunststoffummantelung 22 weist dieser eine höhere Wärmeleitfähigkeit als der Grundkörper 2 auf. Durch das Verschweißen mit dem Grundkörper 2 wird ein besonders kompaktes und einfach zu handhabendes Flüssigkeitsentnahmemodul 1 geboten, das eine hohe Lebensdauer gewährleistet.

Figur 8 zeigt ein weiteres Ausführungsbeispiel des Flüssigkeitsentnahmemoduls 1, das sich von den vorhergehenden Ausführungsbeispielen im Wesentlichen dahingehend unterscheidet, dass die Füllstandserfassungseinrichtung 9 einen berührend arbeitenden Füllstandssensor 41 aufweist, der sich durch das Reflexionsrohr 29 erstreckt, und dadurch vor Schmutz und weiteren äußeren Einflüssen, wie beispielsweise Krafteinwirkung durch Eisbildung, geschützt ist.

Vorzugsweise sind die oben beschriebenen Wärmeleitelemente 18 aus einem metallischen Werkstoff mit guten Wärmeleiteigenschaften ausgebildet. Alternativ können die Wärmeleitelemente 18 auch aus einem gut wärmeleitenden Kunststoff, beispielsweise mit dem oben beschriebenen Füllstoff 5 versehen, verwendet werden, um die Kosten zu senken. Auch ist es denkbar, Kunststoffbauteile mit integrierten Wärmeleitelementen aus Kunststoff bestehend mit eingespritzten und/oder umspritzten Einlegeteilen, mit hoher Wärmeleitfähigkeit, vorzusehen. Vorzugsweise ist das Flüssigkeitsentnahmemodul 1 weiterhin auf seiner von dem Tankinnenraum weg weisenden Seite mit einem Steinschlagschutzschild versehen, der eine Beschädigung bei Einbau des Flüssigkeitsentnahmemoduls beziehungsweise des Flüssigkeitstanks im Fahrzeugboden verhindert. Dieser Steinschlagschutz kann auch zum Schutz gegenüber thermischer Überhitzung/Wärme, zum Beispiel bei der Anordnung in der Nähe zum Abgastrakt des Kraftfahrzeugs, verwendet werden. Auch kann der Steinschlagschutzschild als Windabweiser dienen, insbesondere um ein Einfrieren bei tiefen Temperaturen zu verhindern beziehungsweise das Flüssigkeitsentnahmemodul 1 beim Auftauen gefrorener Flüssigkeit zu unterstützen beziehungsweise zu entlasten. Dadurch kann bei gleicher Heizleistung mehr Flüssigkeit aufgetaut und die Umwelt durch geringeren Energieverbrauch entlastet werden.

Zum Befestigen des Flüssigkeitsentnahmemoduls 1 an dem hier nicht näher dargestellten Flüssigkeitstank weist der Grundkörper 2 eine sich über den gesamten Umfang des Grundkörpers 2 erstreckende axiale Kontaktfläche 42 auf, die auf eine entsprechend ausgebildete Gegenkontaktfläche des Flüssigkeitstanks beziehungsweise der Wandung des Flüssigkeitstanks aufsetzbar ist. Durch Verschweißen des Grundkörpers 2 an der Kontaktfläche 42 mit der Wandung des Flüssigkeitstanks wird eine dichte und feste Verbindung zwischen dem Flüssigkeitsentnahmemodul 1 und dem Flüssigkeitstank gewährleistet, wobei Teile des Flüssigkeitsentnahmemodul 1, insbesondere Gehäuse 7, das Reflexionsrohr 29, gegebenenfalls ein Wärmeleitelement 18 und das Heizelement 20 durch die Öffnung in der Wandung in den Tankinnenraum des Flüssigkeitstanks hineinragen. Wie oben bereits beschrieben, ist die Öffnung vorzugsweise im Boden des Flüssigkeitstanks angeordnet.

## Patentansprüche

1. Flüssigkeitsentnahmemodul (1) zur Entnahme von Flüssigkeit aus einem Flüssigkeitstank, insbesondere eines Abgasnachbehandlungssystems eines Kraftfahrzeugs, umfassend einen in und/oder an dem Fahrzeugtank anordenbaren Grundkörper (2), der eine Flüssigkeitsentnahmeeinrichtung (6) mit einer dem Tankinnenraum zuordenbaren Entnahmeöffnung (5) und mindestens ein elektrisches Heizelement (20) trägt, wobei zwischen dem Heizelement (20) und der Entnahmeöffnung (5) ein Filterelement (15) angeordnet ist, **dadurch gekennzeichnet, dass** mindestens ein Wärmeleitelement (18) vorgesehen ist, das zumindest einen dem Heizelement (20) zugeordneten ersten Abschnitt (24) und einen der Entnahmeöffnung (5) zugeordneten zweiten Abschnitt (25) aufweist, um die Wärme von dem Heizelement (20) zu der Entnahmeöffnung (5) zu transportieren.

2. Flüssigkeitsentnahmemodul nach Anspruch 1, **dadurch gekennzeichnet, dass** die Entnahmeöffnung (5) von dem Grundkörper (2) gebildet wird.

3. Flüssigkeitsentnahmemodul nach einem der vorhergehenden Ansprüche, **dadurch gekennzeichnet, dass** der erste Abschnitt (24) des Wärmeleitelements (18) der Unterseite (37) oder einer Seitenfläche des Heizelements (20) zugeordnet ist.

4. Flüssigkeitsentnahmemodul nach einem der vorhergehenden Ansprüche, **dadurch gekennzeichnet, dass** das Wärmeleitelement (18) als Wärmeleitstift (34,36), als Wärmeleithülse (27) oder als Wärmeleitblech (19) ausgebildet ist.

5. Flüssigkeitsentnahmemodul nach Anspruch 4, **dadurch gekennzeichnet, dass** die Wärmeleithülse (27) bereichsweise in die Entnahmeöffnung (5), insbesondere kraftschlüssig eingebracht ist.

6. Flüssigkeitsentnahmemodul nach Anspruch 4 oder 5, **dadurch gekennzeichnet, dass** die Wärmeleithülse (27) als seitlich geschlitzte Wärmeleithülse (27) ausgebildet ist.

7. Flüssigkeitsentnahmemodul nach Anspruch 4, **dadurch gekennzeichnet, dass** das Wärmeleitblech (19) als gelochtes Wärmeleitblech ausgebildet ist.

8. Flüssigkeitsentnahmemodul nach Anspruch 4, **dadurch gekennzeichnet, dass** der Wärmeleitstift (34) einstückig mit dem Heizelement (20) beziehungsweise mit einer Ummantelung (22) des Heizelements (20) ausgebildet ist.

9. Flüssigkeitsentnahmemodul nach einem der vorhergehenden Ansprüche, **dadurch gekennzeichnet, dass** das Filterelement (15) eine Öffnung (35) aufweist, in welcher das Wärmeleitelement (18) angeordnet oder gehalten ist.

10. Flüssigkeitstank für ein Fahrzeug, insbesondere für ein Abgasnachbehandlungssystem eines Kraftfahrzeugs, mit wenigstens einer Wandung, die eine Öffnung aufweist, wobei in und/oder an dem Flüssigkeitstank ein Flüssigkeitsentnahmemodul (1) zur Entnahme von Flüssigkeit aus dem Tank die Öffnung verschließend angeordnet ist, **gekennzeichnet durch** die Ausbildung des Flüssigkeitsentnahmemoduls (1) nach einem oder mehreren der vorhergehenden Ansprüche.

## Claims

1. Liquid extraction module (1) for extracting liquid from a liquid tank, in particular of an exhaust gas after-treatment system of a motor vehicle, comprising a base body (2) which can be arranged in and/or on the vehicle tank and which carries a liquid extraction device (6) with an extraction orifice (5) which can be allocated to the tank interior and at least one electric heating element (20), a filter element (15) being arranged between the heating element (20) and the extraction orifice (5), **characterized in that** at least one heat-conducting element (18) is provided which has at least one first portion (24) allocated to the heating element (20) and a second portion (25) allocated to the extraction orifice (5) in order to transport the heat from the heating element (20) to the extraction orifice (5).

2. Liquid extraction module according to Claim 1, **characterized in that** the extraction orifice (5) is formed by the base body (2).

3. Liquid extraction module according to any of the preceding claims, **characterized in that** the first portion (24) of the heat-conducting element (18) is allocated to the underside (37) or a side face of the heating element (20).

4. Liquid extraction module according to any of the preceding claims, **characterized in that** the heat-conducting element (18) is formed as a heat-conducting pin (34, 36), a heat-conducting sleeve (27) or a heat-conducting plate (19).

5. Liquid extraction module according to Claim 4, **characterized in that** the heat-conducting sleeve (27) is introduced in regions into the extraction orifice (5), in particular by force fit.

6. Liquid extraction module according to Claim 4 or 5, **characterized in that** the heat-conducting sleeve (27) is formed as a laterally slotted heat-conducting sleeve (27).

7. Liquid extraction module according to Claim 4, **characterized in that** the heat-conducting plate (19) is formed as a perforated heat-conducting plate.

8. Liquid extraction module according to Claim 4, **characterized in that** the heat-conducting pin (34) is formed integrally with the heating element (20) or with a sheathing (22) of the heating element (20).

9. Liquid extraction module according to any of the preceding claims, **characterized in that** the filter element (15) has an orifice (35) in which the heat-conducting element (18) is arranged or held.

10. Liquid tank for a vehicle, in particular for an exhaust gas after-treatment system of a motor vehicle, with at least one wall having an orifice, wherein in and/or on the liquid tank is arranged a liquid extraction module (1) for extracting liquid from the tank, closing the orifice, **characterized by** the formation of the liquid extraction module (1) according to one or more of the preceding claims.

## Revendications

1. Module de prélèvement de liquide (1) pour prélever du liquide d'un réservoir de liquide, en particulier d'un système de post-traitement de gaz d'échappement d'un véhicule automobile, comprenant un corps de base (2) pouvant être disposé dans et/ou sur le réservoir du véhicule, lequel porte un dispositif de prélèvement de liquide (6) avec une ouverture de prélèvement (5) pouvant être associée à l'espace intérieur du réservoir et au moins un élément chauffant électrique (20), un élément de filtre (15) étant disposé entre l'élément chauffant (20) et l'ouverture de prélèvement (5), **caractérisé en ce qu'**au moins un élément thermoconducteur (18) est prévu, lequel présente au moins une première portion (24) associée à l'élément chauffant (20) et une deuxième portion (25) associée à l'ouverture de prélèvement (5), afin de transporter la chaleur depuis l'élément chauffant (20) jusqu'à l'ouverture de prélèvement (5).

2. Module de prélèvement de liquide selon la revendication 1, **caractérisé en ce que** l'ouverture de prélèvement (5) est formée par le corps de base (2).

3. Module de prélèvement de liquide selon l'une quelconque des revendications précédentes, **caractérisé en ce que** la première portion (24) de l'élément thermoconducteur (18) est associée au côté inférieur (37) ou à une face latérale de l'élément chauffant (20).

4. Module de prélèvement de liquide selon l'une quelconque des revendications précédentes, **caractérisé en ce que** l'élément thermoconducteur (18) est réalisé sous forme de goupille thermoconductrice (34, 36), sous forme de douille thermoconductrice (27) ou sous forme de tôle thermoconductrice (19).

5. Module de prélèvement de liquide selon la revendication 4, **caractérisé en ce que** la douille thermoconductrice (27) est introduite en partie dans l'ouverture de prélèvement (5), notamment par engagement par force.

6. Module de prélèvement de liquide selon la revendication 4 ou 5, **caractérisé en ce que** la douille thermoconductrice (27) est réalisée sous forme de douille thermoconductrice fendue latéralement (27).

7. Module de prélèvement de liquide selon la revendication 4, **caractérisé en ce que** la tôle thermoconductrice (19) est réalisée sous forme de tôle thermoconductrice perforée.

8. Module de prélèvement de liquide selon la revendication 4, **caractérisé en ce que** la goupille thermoconductrice (34) est réalisée d'une seule pièce avec l'élément chauffant (20), respectivement avec une enveloppe (22) de l'élément chauffant (20).

9. Module de prélèvement de liquide selon l'une quelconque des revendications précédentes, **caractérisé en ce que** l'élément de filtre (15) présente une ouverture (35) dans laquelle est disposé ou retenu l'élément thermoconducteur (18).

10. Réservoir de liquide pour un véhicule, en particulier pour un système de post-traitement de gaz d'échappement d'un véhicule automobile, comprenant au moins une paroi, laquelle présente une ouverture, un module de prélèvement de liquide (1) pour prélever du liquide du réservoir étant disposé dans et/ou sur le réservoir de liquide en fermant l'ouverture, **caractérisé par** la réalisation du module de prélèvement de liquide (1) selon l'une quelconque ou plusieurs des revendications précédentes.
